Europäisches Patentamt

(19) European Patent Office

Office européen des brevets

(11) Publication number: **0 025 988**
**B1**

(12) **EUROPEAN PATENT SPECIFICATION**

(45) Date of publication of patent specification: **01.02.84**

(21) Application number: **80105609.4**

(22) Date of filing: **18.09.80**

(51) Int. Cl.³: **B 23 K 35/30,** B 23 K 1/04, B 23 P 6/04 //G21C17/10

(54) Braze repair method.

(30) Priority: **20.09.79 US 77207**

(43) Date of publication of application:
**01.04.81 Bulletin 81/13**

(45) Publication of the grant of the patent:
**01.02.84 Bulletin 84/5**

(84) Designated Contracting States:
**BE DE FR IT SE**

(56) References cited:
**FR - A - 1 360 055**
**FR - A - 2 219 552**
**GB - A - 1 472 105**
**US - A - 4 098 450**

**REACTOR HANDBOOK, 2nd Edition, vol. 1, 1960, C.R. TIPTON JR. New York, U.S.A. WELDING HANDBOOK, 7th Edition, vol. 2, 1978, W.H. KEARNS London, G.B. SCHWEISSEN UND SCHNEIDEN, vol. 26, no. 6, June 1974, pages 209-212 Düsseldorf, DE. J. COLBUS et al.: "Eigenschaften von Lötverbindungen mit Gold-Nickel-Lot an Hochtemperaturwerkstoffen. Eine Darstellung des heutigen Wissensstandes"**

(73) Proprietor: **WESTINGHOUSE ELECTRIC CORPORATION**
**Westinghouse Building Gateway Center**
**Pittsburgh Pennsylvania 15222 (US)**

(72) Inventor: **Friedman, Lawrence M.**
**304 LeRoi Road**
**Pittsburgh Penna (US)**
Inventor: **Smith, James E.**
**142 Stotler Drive**
**Delmont, Penna (US)**
Inventor: **Thomas, Burton S.**
**714 Galway Drive**
**Bethel Park, Penna (US)**
Inventor: **Williams, Charles F.**
**6098 Coventry Drive**
**Swartz Creek Michigan 48473 (US)**

(74) Representative: **Fleuchaus, Leo, Dipl.-Ing. et al,**
**Melchiorstrasse 42**
**D-8000 München 71 (DE)**

Courier Press, Leamington Spa, England.

Braze repair method

The invention relates to a method of brazing metal members, performed in a hazardous environment where access by people is limited wherein the surfaces to be brazed are first cleaned and a brazing flux is applied to said metal members.

It is well known in the art that surfaces to be brazed should be cleaned and in the absence of a reducing atmosphere, a brazing flux should be applied for wetting and protection of the metals.

In a typical nuclear pressurized water reactor, a reactor vessel which contains the nuclear fuel comprising the reactor core is designed to also contain the water coolant under pressure. Typically, the pressure of the water coolant is approximately $157.10^5 N/m^2$ (160 kg/cm), and is circulated around the nuclear fuel within the reactor vessel so as to cool the nuclear fuel and to heat the reactor coolant for production of steam in a conventional manner. A closure head is removably bolted to the top of the reactor vessel so that it can be removed for replacement of the nuclear fuel. In addition the reactor closure head has numerous penetrations therein for allowing control rod drive mechanisms and other instrumentation to be operated from outside of the reactor vessel. For example, a number of the penetrations in the reactor closure head allow electrical cables to be extended through the reactor closure head and into contact with instrumentation in the reactor core. The instrumentation of the reactor core may be thermocouples for determining the temperature at various locations throughout the core. The electrical cables such as the electrical cables for the thermocouples generally pass through metal tubes disposed in the reactor closure head and into the reactor vessel. The metal tubes are sealed to the reactor closure head so that the pressurized water within the reactor vessel does not escape therefrom.

Over the life of the nuclear reactor, it is occasionally necessary to reseal the connections between the metal tubes of the instrumentation assemblies and the closure head of the nuclear reactor so that the pressurized water coolant will not escape from the reactor vessel. Of course, the resealing procedure must take place at the power plant site and under difficult conditions in which there is limited access to the metal tubes to be sealed.

For pickling stainless steel articles it is known from GB—A—1 472 105 that a hydrofluoric acid-nitric acid solution provides good results in particular when the solution is warm. This known method, however, requires a treatment in a first and a second bath, comprising different components in order to achieve the desired results.

From "Reactor Handbook", 2nd edition, volume 1, 1960, pages 739, 750, 756, 757 it is known that Au-4 can be used as a brazing filler metal in the reactor field. The brazing temperature of a 82 Au-18 Ni composition is indicated of approximately 999°C.

It is the principal object of the present invention to provide a method for resealing the joints between metal members of the instrumentation assemblies in the closure head of the nuclear reactor which readily seals the joints.

With this object in view the present invention recited a method of brazing metal members as referred to in the above which is characterized in that a hydrofluoric acid-nitric acid solution comprising approximately 2% HF, 18% $HNO_3$, and 80% $H_2O$ is applied around said metal members and boiled at 80—100°C for 40 to 80 minutes for cleaning said metal members and whereupon water is boiled around said metal members for reducing the fluoride ion concentration that thereafter B-Au-4 brazing alloy is applied to said metal members, and to effect brazing said metal members are heated to between 970°C to 1020°C for 1—2 minutes.

The invention will become more readily apparent from the following description of a preferred embodiment thereof shown by way of example only, in the accompanying drawings, wherein:

Figure 1 is a diagram of a typical nuclear reactor;

Figure 2 is a plan view of a typical nuclear reactor;

Figure 3 is a partial cross-sectional view in elevation of an instrumentation column;

Figure 4 is a view along line IV—IV of Figure 3; and

Figure 5 is an enlargement of a cross-sectional view of the brazed joint.

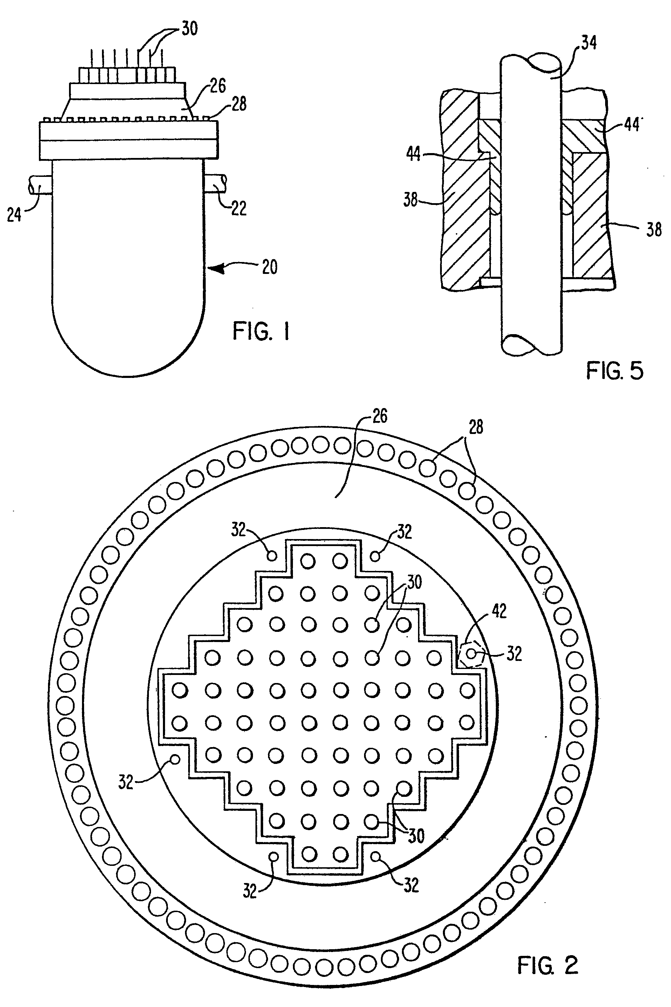

Referring to Figure 1, a nuclear reactor pressure vessel is referred to generally as 20 and is designed to contain nuclear fuel and a pressurized water coolant as is well known in the art. An inlet nozzle 22 is attached to pressure vessel 20 along with an outlet nozzle 24 for circulating the pressurized water coolant through pressure vessel 20. The closure head 26 is removably attached to pressure vessel 20 by means of bolts 28. In this manner, closure head 26 may be removed so that access may be had to the nuclear reactor core disposed within pressure vessel 20. A plurality of control rod drive mechanism assemblies 30 extend through closure head 26 so as to be capable of inserting or withdrawing control rods from the core of the nuclear reactor in a manner well understood in the art. In addition, a plurality of instrumentation columns 32 are disposed at various locations in closure head 26 and extend through closure head 26 into nuclear reactor pressure vessel 20. Instrumentation columns 32 are generally a collection of hollow metal tubes sealed to closure head 26 to prevent leakage around and between the metal tubes so that the pressurized water within nuclear reactor pressure vessel 20 does not escape therefrom. Instrumentation columns 32 are designed such that electrical connections may be extended through the hollow metal tubes and into the nuclear reactor where they are connected to various types of instrumentation, such as thermocouples. Instrumentation columns 32 thereby provide a mechanism for allowing electrical connections to be passed through closure head 26 so that various parameters of the nuclear reactor operation may be monitored from outside of nuclear reactor pressure vessel 20.

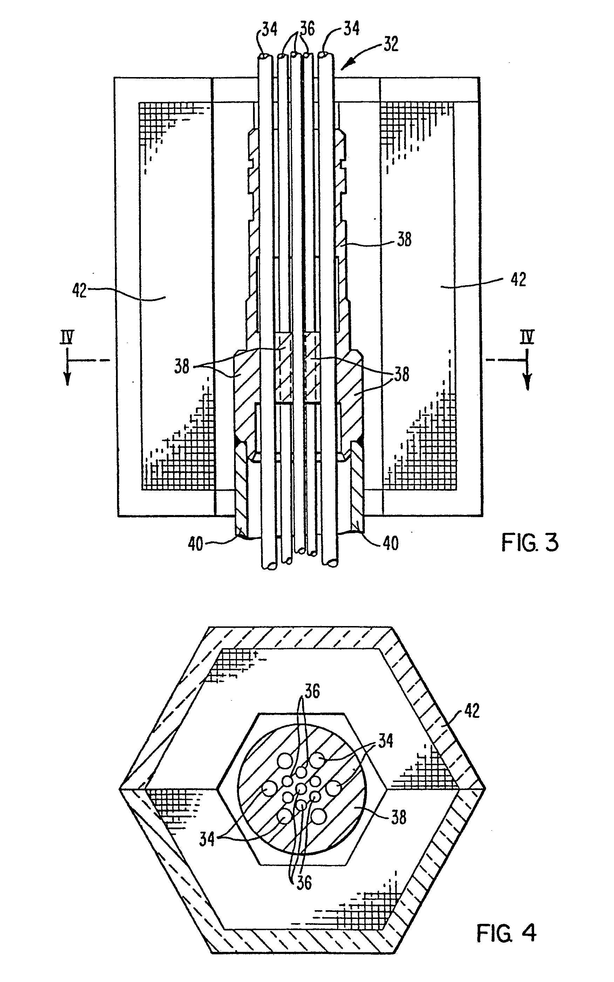

Referring now to Figures 3, 4 and 5, a typical instrumentation column 32 comprises first tubes 34 which may be 9.5 mm diameter stainless steel tubes and second tubes 36 which may be 6.3 mm diameter stainless steel tubes. First tubes 34 and second tubes 36 extend through holes in base member 38 and are supported thereby. First tubes 34 and second tubes 36 are originally brazed to base member 38 with a Au-4 braze alloy (81.5% Au-18.5% Ni) in a hydrogen atmosphere. The hydrogen reduces the oxides on the surfaces to be brazed so that a flux is not used for this original operation. The brazed joint provides a seal between base member 38, first tubes 34 and second tubes 36 so that the pressurized water coolant will not leak from reactor vessel 20. Base member 38 is supported by and is welded to instrumentation tube 40 which in turn is welded to closure head 26. The original braze joint between base member 38 and first tubes 34 and between base member 38 and second tubes 36 is made in the factory and prior to the welding of base member 38 to instrumentation tube 40 so that the type of method used to braze the joint is not limited by on-site conditions. First tubes 34 and second tubes 36 extend through base member 38 and through instrumentation tube 40 into nuclear reactor pressure vessel 20. Electrical cables (not shown) extend through both first tubes 34 and second tubes 36 and into pressure vessel 20 so as to be connected to instrumentation disposed within pressure vessel 20 such as thermocouples or neutron flux detectors.

It has been found that the original braze joint between first tubes 34 and base member 38 and between second tubes 36 and base member 38 that was established in the factory prior to installation, may deteriorate after an extended period of use. Thereafter, it may become advisable to reseal the connection between first tubes 34 and base member 38 and the connection between second tubes 36 and base member 38 while the instrumentation column 32 is attached to instrumentation tube 40 and located at the power plant site. One way of accomplishing the resealing process would be to rebraze the joint between the members. Since the rebrazing operation must take place in the field, the process that was used at the factory upon initial assembly of the instrumentation column cannot be performed at the reactor plant site due to various problems. For example, cleaning of the members to be joined in a hydrogen atmosphere is not advisable at the reactor plant site because of the additional cumbersome hardware that would be required to maintain an effective gaseous atmosphere and, in the case of hydrogen, to eliminate a potential safety hazard inherent in the use of hydrogen. Therefore, a new procedure had to be developed to rebraze the joint at the nuclear power plant site.

Referring to the drawings, the first step in the brazing method is to effectively clean surface oxides, oil, grease, and other foreign particles from the surfaces to be brazed. Because of the geometry of the assembly, a mechanical means of cleaning the surfaces is not possible. This is due to the fact that the joint to be brazed is located a substantial distance within base member 38 and cannot be reached for a mechanical cleaning operation. The cleaning step involves placing approximately 100 milliliters of a hydrofluoric acid-nitric acid solution comprising approximately 2% HF, 18% $HNO_3$, 80% $H_2O$ into the base member cavity so that the solution surrounds and contacts first tubes 34, second tubes 36, and base member 38. A portable furnace 42 is then placed around the assembly so as to provide heat to lightly boil the cleaning solution at 80°C—100°C for 40—80 minutes. Preferably, the solution is lightly boiled at approximately 94°C for approximately 60 minutes. The furnace must be capable of being placed within the maximum amount of space between the instrumentation column assemblies and the plates shielding the control rod drive mechanisms which is generally approximately 10 inches. Commercially available furnaces can be used which utilize 12, 2 KW quartz lamps as the heating elements and which meet the necessary space requirements. The furnace may be a clam-shell type so that it can be opened and placed around instrumentation column 32. The furnace should also contain a piping system that allows the introduction of air or shielding gas through the furnace and directs the air or gas onto the instrumentation column. One such furnace that may be chosen from those well known in the art weighs approximately 18 kg. The power requirement for such a furnace can be 480 volts or 240 volts, single phase, 60 cycles which can be readily used at the power plant site. The maximum current capacity of the quartz lamp heating system is approximately 100 amperes at 240 volts and 50 amperes at 480 volts so that the furnace can have the capacity to rapidly heat the instrumentation column to the required brazing temperature. Such a furnace can be produced from Research, Incorporated, of Mineapolis, Minnesota.

The fluoride ions resulting from the acid cleaning operation are then reduced to acceptable levels by boiling water in the base cavity. Fifteen 10-minute water boils of the base cavity were found to reduce the fluoride ion concentration to the levels permitted within the primary reactor system.

Following the water boiling, the base cavity and tube surfaces are dried by heating them to approximately 120°C for approximately 5 minutes.

Next, since the brazing operation is designed to be performed in the field, a brazing flux can be used rather than a gaseous atmosphere to maintain the surfaces clean during the brazing operation. This can be done to eliminate additional cumbersome hardware that would be required to maintain an effective gaseous atmosphere in the field and, in the case of hydrogen, to eliminate a potential safety hazard. An acceptable flux must be capable of dissolving and absorbing surface oxides prior to the braze alloy becoming molten. When the braze alloy becomes molten it must readily displace the molten flux so that complete wetting of the surfaces to be brazed is achieved. The flux chosen for the brazing operation should meet most of the following criteria:

(a) should readily dissolve and absorb oxides;

(b) should prevent re-oxidation of clean surfaces during the heat-up cycle;

(c) should be available in a form for easy application to the surfaces to be brazed;

(d) should have a melting temperature lower than the melting temperature of the braze alloy and yet within 400°F to 500°F of the brazing temperature so that excessive degradation or loss of the liquid flux does not occur, during the heating step;

(e) should have a vaporization temperature considerably higher than the brazing temperature;

(f) should have good wetting characteristics;

(g) should be readily displaceable by the molten braze alloy;

(h) should be chemically acceptable (that is, should not contain undesirable elements such as chlorine and fluorine); and

(i) should provide a successful braze in air.

A flux that meets all of these requirements is sodium tetraborate ($Na_2B_4O_7$). More specifically, sodium tetraborate is acceptable chemically, is known to readily dissolve and absorb oxides when molten, and has a melting temperature approximately 250°C below the intended brazing temperature. Sodium tetraborate also has a vaporization temperature far above the brazing temperature and is available in the form that would allow ready application into the base member cavity.

A thin layer of powdered sodium tetraborate flux is then introduced into the cavity of base member 38. Next, a charge of approximately 15—50 grams of braze alloy 44 is then introduced into the cavity of base member 38. Preferably, a charge of approximately 30 grams of braze alloy is used. The braze alloy may be B-Au-4 gold brazing alloy in the form of 1.6 mm diameter wire cut to 6.3 mm to 9.5 mm lengths and placed in the cavity of base member 38. In addition a thin layer of sodium tetraborate flux may then be added to the cavity so as to cover the braze alloy.

The assembly is then heated as rapidly as possible to the brazing temperature which is selected to be approximately 55° above the melting temperature of the braze alloy. In the case of the B-Au-4 alloy, the brazing temperature is 970°C to 1020°C and preferably approximately 990°C. As the assembly is heated to the brazing temperature, the flux flows into the spaces between first tubes 34 and base member 38 and between second tubes 36 and base member 38 thereby preparing those surfaces for the braze alloy. As the brazing temperature is approached, the braze alloy becomes molten and flows between the members to be brazed as shown in Figure 5. The assembly is then held at the brazing temperature for a time sufficient to achieve the brazed joint. The braze temperature, 990°C, is held for approximately 1—2 minutes and preferably for about 1.5 minutes. After the braze holding time, the furnace is deactivated and compressed air is piped into the assembly to achieve rapid cooling. The compressed air is circulated around instrumentation column 32 for approximately 10 minutes so as to reduce the temperature of instrumentation column 32 to below 360°C.

Therefore, it can be seen that the invention provides a method for repairing brazed joints in the field.

## Claims

1. A method of brazing metal members, performed in a hazardous environment where access by people is limited wherein the surfaces to be brazed are first cleaned and a brazing flux is applied to said metal members, characterized in that a hydrofluoric acid-nitric acid solution comprising approximately 2% HF, 18% $HNO_3$, and 80% $H_2O$ is applied around said metal members and boiled at 80—100°C for 40 to 80 minutes for cleaning said metal members whereupon water is boiled around said metal members for reducing the fluoride ion concentration and that thereafter B-Au-4 brazing alloy is applied to said metal members, and to effect brazing said metal members are heated to between 970°C and 1020°C for 1—2 minutes.

2. A method according to claim 1, characterized in that the said metal members are heated to approximately 990°C for approximately 1.5 minutes.

3. A method according to claim 1 or 2, characterized in that said metal members are heated to approximately 120°C for approximately 5 minutes for drying said metal members.

4. A method as claimed in any of claim 2 or 3, characterized in that said flux is sodium tetraborate flux.

## Patentansprüche

1. Verfahren zum Hartlöten von metallischen Elementen in einer gefährlichen Umgebung, die für Menschen nur beschränkt zugänglich ist, wobei die hartzulötenden Flächen zunächst gereinigt werden und auf die metallischen Elemente ein Hartlöt-Flußmittel aufgetragen wird, dadurch gekennzeichnet, daß zum Reinigen der metallischen Elemente eine Fluorwasserstoffsäure-Salpetersäure-Lösung, die etwa 2% HF, 18% $HNO_3$ und 80% $H_2O$ enthält, um die metallischen Elemente herum aufgetragen und 40 bis 80 Minuten lang bei 80 bis 100°C gekocht wird, daß danach Wasser um die metallischen Elemente herum zum Sieden gebracht wird, um die Fluoridionenkonzentration berabzusetzen, daß danach auf die metallischen Elemente ein B-Au-4-Hartlot aufgetragen wird und daß zum Hartlöten die metallischen Elemente 1 bis 2 Minuten lang auf 970 bis 1020°C erhitzt werden.

2. Verfahren nach Anspruch 1, dadurch gekennzeichnet, daß die metallischen Elemente etwa 1,5 Minuten lang auf etwa 990°C erhitzt werden.

3. Verfahren nach Anspruch 1 oder 2, dadurch gekennzeichnet, daß zum Trocknen der metallischen Elemente diese etwa 5 Minuten lang auf etwa 120°C erhitzt werden.

4. Verfahren nach Anspruch 2 oder 3, dadurch gekennzeichnet, daß das Flußmittel Natriumtetraborat-Flußmittel ist.

## Revendications

1. Un procédé pour braser des éléments métalliques, mis en oeuvre dans un environnement dangereux où l'accès aux personnes est limité, procédé dans lequel les surfaces à braser sont tout d'abord nettoyées et un flux de brasage est appliqué auxdits éléments métalliques, caractérisé en ce qu'une solution d'acide fluorhydrique-acide nitrique comprenant environ 2% HF, 18% $HNO_3$ et 80% $H_2O$ est appliquée autour desdits éléments métalliques et portée à l'ébullition à 80—100°C pendant 40 à 80 minutes pour nettoyer lesdits éléments métalliques, après quoi l'eau bout autour desdits éléments métalliques pour réduire la concentration en ions fluorure et qu'ensuite un alliage de brasage B-Au-4 est appliqué auxdits éléments métalliques et pour que le brasage s'effectue, lesdits éléments métalliques sont chauffés entre 970°C et 1020°C pendant 1—2 minutes.

2. Un procédé selon la revendication 1, caractérisé en ce que lesdits éléments métalliques sont chauffés jusqu'à environ 990°C pendant environ 1,5 minute.

3. Un procédé suivant les revendications 1 ou 2, caractérisé en ce que lesdits éléments métalliques sont chauffés jusqu'à environ 120°C pendant environ 5 minutes pour qu'ils séchent.

4. Un procédé suivant l'une quelconque des revendications 2 ou 3, caractérisé en ce que ledit flux est un flux de tétraborate de sodium.

FIG. I

FIG. 5

FIG. 2

FIG. 3

FIG. 4